Europäisches Patentamt

European Patent Office

Office européen des brevets

(11) Numéro de publication: **0 114 009**
**B1**

(12) **FASCICULE DE BREVET EUROPEEN**

(45) Date de publication du fascicule du brevet: **02.09.87**

(21) Numéro de dépôt: **83402378.0**

(22) Date de dépôt: **09.12.83**

(51) Int. Cl.⁴: **G 01 N 25/54**

(54) Procédé et dispositif de détermination du taux d'explosivité d'un milieu gazeux.

(30) Priorité: **14.12.82 FR 8220925**

(43) Date de publication de la demande:
**25.07.84 Bulletin 84/30**

(45) Mention de la délivrance du brevet:
**02.09.87 Bulletin 87/36**

(84) Etats contractants désignés:
**AT BE CH DE FR GB IT LI LU NL SE**

(56) Documents cités:
**FR-A-2 117 514**
**US-A-4 140 004**

(73) Titulaire: **Etablissement public dit:**
**CHARBONNAGES DE FRANCE**
**9, Avenue Percier**
**F-75008 Paris (FR)**

(72) Inventeur: **Boutonnat, Maurice**
**Route des Carrières**
**F-60270 Gouvieux (FR)**
Inventeur: **Marget, Christian**
**1 bis, Avenue A. Lepercq**
**F-60550 Verneuil en Halatte (FR)**

(74) Mandataire: **Santarelli, Marc et al**
**Cabinet Rinuy et Santarelli 14, avenue de la**
**Grande Armée**
**F-75017 Paris (FR)**

Courier Press, Leamington Spa, England.

## Description

La présente invention concerne de manière générale la détection de gaz explosifs dans un milieu gazeux tel que l'air.

De manière connue en soi, la détection d'un gaz explosif dans l'air est assurée par un appareil, usuellement appelé explosimètre à filament catalytique, dans lequel un filament, généralement de platine, est chauffé par effet Joule, c'est-à-dire par passage d'un courant électrique. Le gaz explosif contenu dans l'air s'oxyde par catalyse au contact du filament, d'où un échauffement supplémentaire de ce dernier. L'élévation de température qui en résulte provoque une élévation de la résistance du filament, dont la mesure permet d'avoir accès à la concentration dudit gaz explosif dans l'air. En pratique, on s'intéresse au taux d'explosivité du gaz, c'est-à-dire au rapport de sa concentration par sa limite inférieure d'explosivité (LIE), c'est-à-dire la teneur en ce gaz au-dessus de laquelle il y a risque d'explosion; c'est pourquoi le résultat de la détection est usuellement présenté sous forme d'un pourcentage de la limite LIE précitée.

A titre d'exemple, la Demanderesse a proposé dans son brevet FR—A—1 444 771 déposé le 4 mai 1965, un appareil portatif de prélèvement et de dosage de gaz dans l'air. Le dosage de gaz y est effectué de manière classique par mesure de la tension aux bornes de l'une des diagonales d'un pont résistif constitué par un filament détecteur et un filament compensateur montés en parallèle avec deux résistances dont l'une est avantageusement réglable, ce pont étant alimenté électriquement selon son autre diagonale.

Dans un cadre plus général, la Demanderesse a également proposé, dans son brevet FR—A—1 557 448, déposé le 22 mai 1968, un procédé et un appareil de mesure d'une grandeur caractéristique d'un milieu gazeux, selon lesquels la valeur de la grandeur considérée est estimé à partir de la mesure d'une des données d'alimentation d'un filament détecteur lorsque la résistance de ce dernier est maintenue égale à celle d'un filament compensateur.

A l'usage, de tels explosimètres se révèlent donner de très résultats pour le gaz explosif qui a servi à leur étalonnage, tandis que pour d'autres gaz, les taux de concentration estimés s'écartent très sensiblement des taux réels.

Ces écarts résultent en partie des différences existant entre les gaz concernant notamment leur chaleur d'oxydation, leur température de combustion, leur conductibilité thermique, et surtout leur coefficient de diffusion dans l'air (l'hydrogène par exemple diffuse quatre fois plus vite que le méthane). Ces différences influent sur le renouvellement de gaz explosif auprès du filament, la qualité de la combustion (incomplète ou précoce selon la température du filament), le nombre de calories ainsi disponibles, et leur évacuation dans le milieu gazeux environnant. Il est à noter que ces écarts correspondent souvent à des sous-estimations des valeurs réelles, ce qui est défavorable du point de vue sécurité.

L'invention vise à réduire ces écarts et a pour objet un procédé perfectionné de détermination du taux d'explosivité d'un milieu gazeux, ainsi qu'un dispositif pour sa mise en oeuvre, qui permettent d'échapper, au moins partiellement, à l'influence néfaste des sources d'écart précitées.

L'invention propose à cet effet un procédé de détermination du taux d'explosivité d'un milieu gazeux contenant au moins un gaz explosif, selon lequel on chauffe dans ce milieu un filament détecteur par passage de courant électrique, caractérisé en ce que:

—on allume le filament par connexion à une source d'alimentation;

—on régule l'alimentation du filament détecteur de manière à en maintenir la résistance constante;

—on prend en compte, en plusieurs instants successifs comptés à partir de l'allumage du filament, la valeur U(t) d'une grandeur U significative de l'alimentation dudit filament;

—on extrapole à partir des dites valeurs U(t) une courbe exponentielle d'équation

$$U(t)= \sum_{i=1}^{i=n} U_{o,i} \cdot \exp(-k_i \cdot t)$$

dont on identifie les paramètres $U_{o,i}$ et $k_i$, n étant un petit nombre entier égal voire supérieure à 1 choisi arbitrairement et i prenant dans cette équation des valeurs entières successives de 1 à n; et

—on introduit les paramètres $U_{o,i}$ et $k_i$ dans une fonction de traitement F adaptée à donner, indépendamment de la nature du gaz explosif présent dans ce milieu gazeur, à partir de ces paramètres, une estimation du taux d'explosivité initial dudit milieu gazeux.

Ce procédé de l'invention est fondé sur la découverte par la Demanderesse qu'il est possible, de manière surprenante, d'établir une fonction empirique simple, permettant de relier les paramètres précités, $U_{o,i}$ coefficients pré-exponentiels et $k_i$ exposants, au taux d'explosivité $x_o$ d'un mélange gazeux, qui soit sensiblement indépendante de la nature du ou des gaz en présence. La précision sur le résultat dépend bien sûr de la précision avec laquelle a été établie ladite fonction empirique ainsi que du nombre n de fonctions exponentielles utilisées: il faut cependant garder à l'esprit qu'une trop grande précision serait illusoire puisque la limite inférieure d'explosivité est une notion imprécise en elle-même, sa mesure dépendant notamment de la méthode et du matériel expérimentaux utilisés, et de paramètres tels que la température. Dans le cas général, on se limite en pratique à n=1, voire n=2 dans le cas de gaz très différents.

Dans le cas de mélanges de gaz explosifs, la mise en oeuvre de l'invention nécessite le choix préalable d'une hypopthèse concernant la relation entre le taux d'explosivité du mélange, et ceux des gaz explosifs pris individuellement. En première approximation, on admet généralement, conformément à la loi de Le Chatelier, qu'il suffit de faire la somme de ces derniers. D'autres hypothèses peuvent néanmoins être proposées le cas échéant, sans sortir du cadre de l'invention.

Selon l'invention, grâce à la mise en oeuvre d'une fonction F judicieusement choisie, le taux d'explosivité d'un mélange gazeux contenant un ou plusieurs gaz explosifs est estimé avec une précision sensiblement indépendante de la nature du ou des gaz explosifs présents. Il en résulte pour le procédé selon l'invention, et donc pour les dispositifs assurant sa mise en oeuvre, un caractère universel puisqu'ils sont adaptés, sans modification, à estimer le taux d'explosivité d'une grande variété de milieux gazeux.

Il est à noter en outre que selon l'invention, on prend en compte l'écoulement du temps, et que l'on a accès au taux d'explosivité initial $x_o$ du milieu gazeux, c'est-à-dire avant toute perturbation liée aux opérations de mesure.

Dans une forme préférée de l'invention, on met en oeuvre, en outre, un filament compensateur identique au filament détecteur, alimenté dans des conditions analogues, dans un milieu gazeux analogue à celui du filament détecteur mais ne contenant aucun gaz explosif, et

la grandeur significative U de l'alimentation du filament détecteur est la différence entre les tensions d'alimentation des filaments détecteur et compensateur. On élimine ainsi les fluctuations de l'environnement pouvant affecter les opérations de mesure et leur résultat.

L'invention préconise tout particulièrement d'utiliser comme fonction de traitement F, pour n=1, le rapport, à un coefficient multiplicatif près, du paramètre préexponentiel $U_o$ de l'équation exponentielle extrapolée, par l'exposant k de cette dernière ou, pour n>1, à un coefficient multiplicatif près, la somme

$$\sum_{i=1}^{i=n} (U_{o,i}/k_i).$$

Une telle fonction, extrêmement simple, ne nécessite la mise en oeuvre que de moyens de calcul rudimentaires. D'autres fonctions simples sont proposées par l'invention: elles diffèrent de la précédente par le remplacement des dénominateurs par des fonctions polynômes en $k_i$ du premier degré, du second voire du troisième degré en fonction de la précision recherchée, du nombre et de la nature des gaz que l'appareil peut avoir à doser.

Par souci de simplification, l'invention préconise en outre de déterminer les paramètres de la fonction exponentielle extrapolée en utilisant une expression approchée de cette dernière, c'est-à-dire son développement limité du premier ordre pour n=1, ou son développement limité du troisième ordre pour n=2.

Compte tenu de la disparité de comportement existant entre les gaz explosifs, notamment l'hydrogène vis-à-vis des autres hydrocarbures, l'invention préconise en outre, dans le cas n=1, d'introduire les paramètres $U_o$ et k dans une fonction choisie en fonction de la position de l'exposant k vis-à-vis d'une valeur critique $k_o$. Il se trouve en effet que la Demanderesse a découvert, dans le cas de l'hydrogène qui se comporte différemment des autres hydrocarbures, une différence concomitante entre les exposants exponentiels auxquels ce gaz conduite, et ceux des autres hydrocarbures qui se révèlent rester à l'intérieur d'une plage étroite. En variante, on met en oeuvre deux couples de paramètres, $(U_{o,i}, k_i)$, l'un corresponddant aux gaz rapides, tel que l'hydrogène, l'autre correspondant aux gaz plus lents.

Pour la mise en oeuvre du procédé précité, l'invention préconise un dispositif de détermination du taux d'explosivité d'un milieux gazeux, caractérisé en ce qu'il comporte:

—un filament détecteur disposé dans une cellule de mesure enfermant le milieu gazeux;

—un circuit régulateur comportant une source d'alimentation, adapté à alimenter électriquement ledit filament détecteur de manière à en maintenir constante la résistance;

—un convertisseur analogique-numérique commandé par un compteur-temporisateur et auquel est appliquée une grandeur significative de l'alimentation dudit filament; et

—une unité de traitement numérique adaptée à prendre en compte les signaux fournis par le convertisseur et à déterminer une estimation du taux d'explosivité du milieu gazeux.

Compte tenu du caractère universel du procédé dont un tel dispositif assure la mise en oeuvre, et de la simplicité des éléments qui le composent, il résulte pour ces dispositifs une standardisation des séries de fabrication avec des coûts unitaires modérés conduisant à une large diffusion de ces dispositifs. L'invention assure de ce fait un sensible accroissement de la sécurité dans tous les lieux où existent, ou risquent d'apparaître des gaz explositifs.

D'autres objets, caractéristiques et avantages de l'invention ressortent de la description qui suit, donnée à titre d'exemple, en regard des dessins annexés sur lesquels:

—la figure 1 est un graphique indiquant, pour différents hydrocarbures, les taux d'explosivité estimés par un explosimètre connu en fonction des taux réels;

—la figure 2 est un synoptique d'un dispositif selon l'invention;

—la figure 3 est une vue détaillée de la partie analogique de ce dispositif;

—la figure 4 est une vue schématique de la partie numérique de ce dispositif;

—la figure 5 est un graphique indiquant l'évolution au cours du temps de la grandeur U;

—la figure 6 est un graphique corrélant, pour différents hydrocarbures et l'hydrogène, le paramètre $U_o$ et le taux d'explosivité réel dans l'air;

—la figure 7 est un graphique corrélant, pour divers hydrocarbures et l'hydrogène, le rapport $U_o/k$ avec le taux d'explosivité réel dans l'air;

—la figure 8 est un diagramme indiquant le taux d'explosivité d'un mélange de méthane et de décane, estimés suivant un procédé selon l'invention, en fonction de la teneur en méthane;

—la figure 9 est un diagramme analogue au précédent, correspondant à un mélange d'hydrogène et de méthane;

—la figure 10 est un graphique corrélant, pour divers gaz explosifs, une grandeur caractéristique $K_2$ avec le coefficient de diffusion dans l'air D;

—la figure 11 est un graphique corrélant pour divers hydrocarbures, le rapport $U_o/x_o$ avec le paramètre k; et

—la figure 12 est un diagramme analogue à celui de la figure 9, estimé suivant un procédé amélioré selon l'invention.

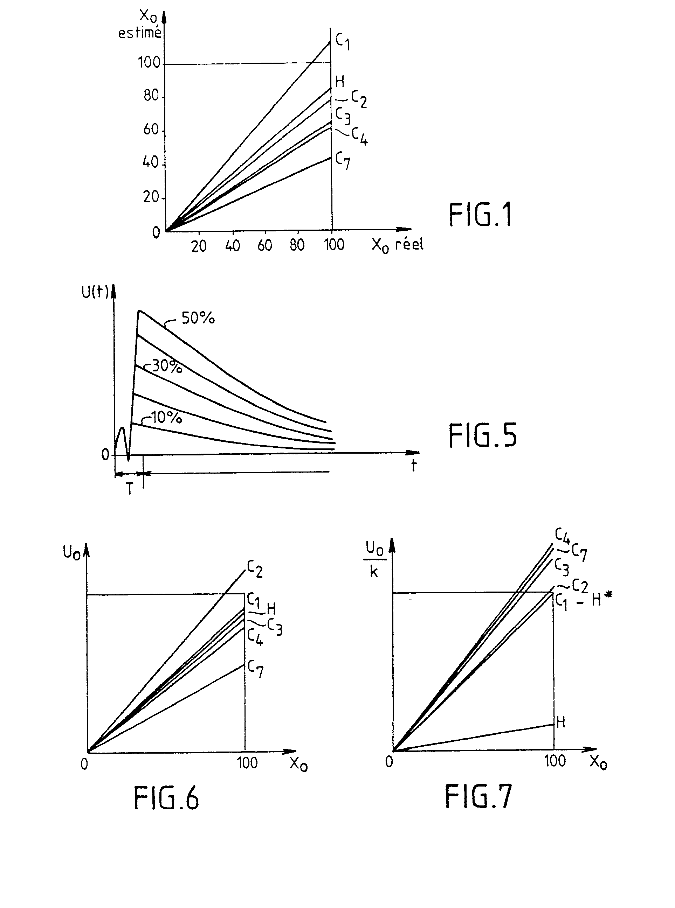

La figure 1 illustre les écarts entre les taux d'explosivité réels et mesurés, pour l'hydrogène et divers hydrocarbures, associés à un explosimètre de type connu, dont la référence est MSA DGE 2000. On retrouve que ces écarts correspondent presque toujours à une sous-estimation des taux réels, ce qui est préjudiciable à la sécurité.

Sur ce graphique, ainsi que sur les suivants, les gaz explosifs sont désignés par des symboles dont la signification est précisée dans la table ci-dessous:

$$H—\text{hydrogène}$$
$$C_1—\text{Méthane}$$
$$C_2—\text{Ethylène-Ethane}$$
$$C_3—\text{Propane}$$
$$C_4—\text{Butane}$$
$$C_5—\text{Pentane}$$
$$C_7—\text{Heptane-Acetone}$$
$$C_8—\text{Octane}$$
$$C_{10}—\text{Décane}$$

L'examen du graphique de la figure 1 révèle que les taux d'explosivité mesurés pour un hydrocarbure donné sont d'autant plus sous-estimés que cet hydrocarbure admet des molécules encombrantes, c'est-à-dire (en première approximation) qui diffusent lentement dans l'air vers le filament (et inversement). Ces écarts semblent donc pouvoir être attribués pour une grande part aux différences de coefficient de diffusion dans l'air existant entre ces gaz. L'hydrogène, qui n'est pas un hydrocarbure, se place, malgré sa faible masse moléculaire, entre le méthane et l'éthylène.

On observe que, pour un taux d'explosivité $x_o$ réel donné, il y a un écart de près 70% entre les résultats obtenus pour les gaz extrêmes, le méthane et l'heptane. Cela explique pourquoi, à ce jour, on utilise autant d'explosimètres qu'il y a de gaz explosifs à doser.

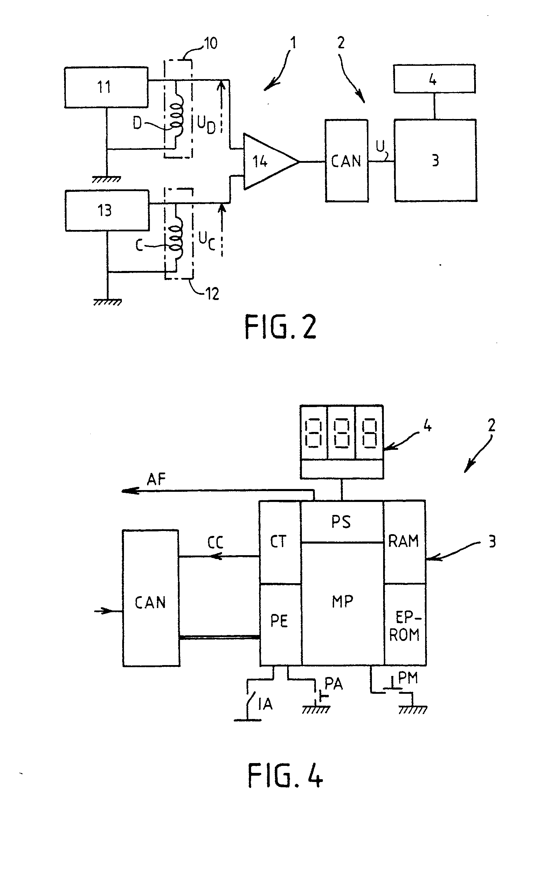

Selon l'invention, on pallie cet inconvénient, au moins partiellement, à l'aide d'un dispositif dont la structure générale est présentée à la figure 2. Ce dernier se décompose en une partie analogique de mesure 1 suivie d'un convertisseur analogique-numérique CAN puis d'une unité de traitement numérique 2.

L'unité de mesure 1 comporte un filament détecteur D disposé dans une cellule de mesure 10 enfermant une partie du milieu gazeux à doser. Entre ses bornes, dont l'une est à la masse, est disposé un dispositif régulateur 11 adapté à réguler l'alimentation du filament D de manière à en maintenir constante la résistance malgré les réactions d'oxydation qu'il provoque, le cas échéant, dans le milieu gazeux enfermé dans le cellule 10.

De manière avantageuse, l'unité de mesure 1 comporte en outre un filament compensateur C, identique au filament détecteur, qui est placé dans un environnement gazeux, analogue au milieu gazeux considéré mais exempt de tout gaz explosif, enfermé dans une seconde cellule de mesure 12. Le filament compensateur participe à un montage identique à celui du filament détecteur, un régulateur 13, analogue au régulateur 11, en modulant l'alimentation de manière à en maintenir constante la résistance.

Les bornes deu filaments qui ne sont pas à la masse sont reliées aux entrées d'un comparateur 14, adapté par exemple à mesurer la différence de tension existant entre ces bornes. Cette comparaison des alimentations des deux filaments permet de supprimer l'influence de paramètres expérimentaux susceptibles de fluctuer, notamment les variations de température extérieure et l'usure du filament détecteur. Sur ce dernier point, il est précisé que les filaments détecteur et compensateur sont avantageusement remplacés simultanément.

La sortie du comparateur 14 est connectée à l'entrée du convertisseur analogique-numérique CAN suivi d'un élément de calcul 3 complété par un organe d'affichage 4.

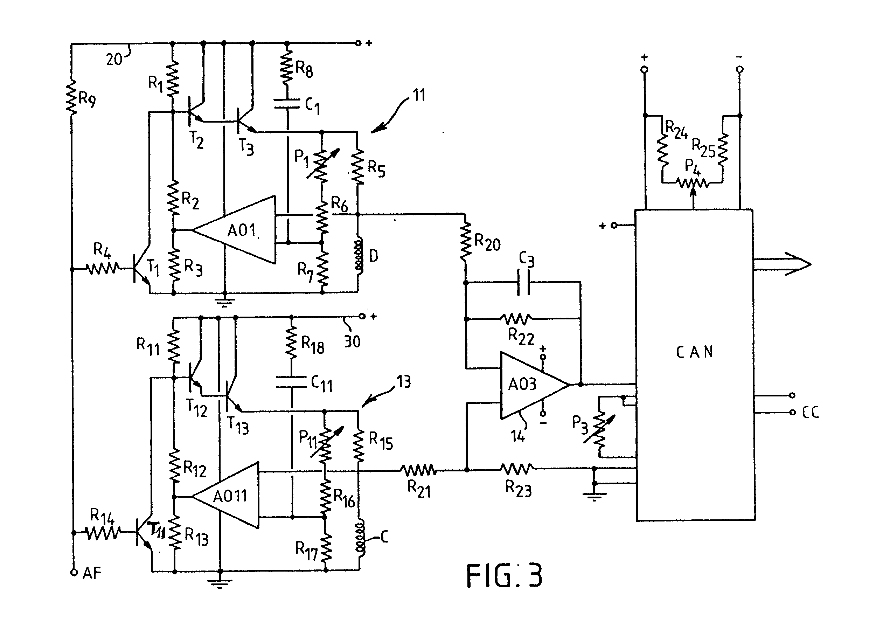

La structure de la partie analogique de mesure 1 est détaillée à la figure 3. Les régulateurs 11 et 13 ont la même structure. La description qui suit est limitée au régulateur 11. Les éléments du régulateur 13 portent des références obtenues par addition de 10 à celles des éléments correspondants du régulateur 11.

Le régulateur 11 du filament détecteur D comporte une barre d'alimentation 20 à potentiel constant (5V dans l'exemple considéré). Une chaîne résistive formée de résistances $R_1$, $R_2$, $R_3$ montées en série est montée entre cette barre 20 et la masse. Les résistances $R_2$ et $R_3$ sont montées entre le collecteur et l'émetteur d'un transistor $T_1$, formant élément d'allumage, dont la base est reliée au travers d'une résistance $R_4$ à une borne AF d'allumage de filament. La borne commune des résistances $R_1$ et $R_2$ est à la base d'un transistor $T_2$ dont l'émetteur à son tour est à la base d'un second transistor $T_3$. Les collecteurs des transistors $T_2$ et $T_3$ sont à la barre 20 tandis que l'émetteur de $T_3$ est relié à la masse au travers d'un pont résistif auquel participe le filament D. Ce pont comporte d'une part une résistance $R_5$ et D, et d'autre part une résistance $R_6$, en série avec une résistance variable $P_1$, et une résistance $R_7$.

Un amplificateur opérationnel A01 dont les entrées sont montées selon la diagonale transversale du pont résistif a sa sortie reliée à la jonction des résistances $R_2$ et $R_3$. La jonction $R_6$—$R_7$ est avantageusement reliée à la barre d'alimentation 20 au travers d'un circuit ($C_1+R_8$ d'amortissement des oscillations dues à l'inertie thermique du filament.

La borne AF à laquelle sont reliées les résistances analogues $R_4$ et $R_{14}$ est reliée à la barre 20 au travers d'une résistance $R_9$.

Les bornes des filaments D et C reliées aux amplificateurs opérationnels associées sont connectées au travers de résistances $R_{20}$ et $R_{21}$ aux entrées d'un amplificateur operationnel de comparaison $A0_3$ dont la sortie est à l'entrée analogique du convertisseur analogique-numérique CAN. Cette sortie de l'élément de comparaison $A0_3$ est couplée, par $C_3$ et $R_{22}$ en parallèle, à son entrée venant du filament détecteur, tandis que l'entrée venant du filament compensateur est à la masse au travers d'une résistance $R_{23}$.

Le convertisseur CAN est classiquement à sortie parallèle 12 bits. Deux potentiomètres $P_3$ et $P_4$ en permettent le réglage en gain et le décalage en zéro respectivement.

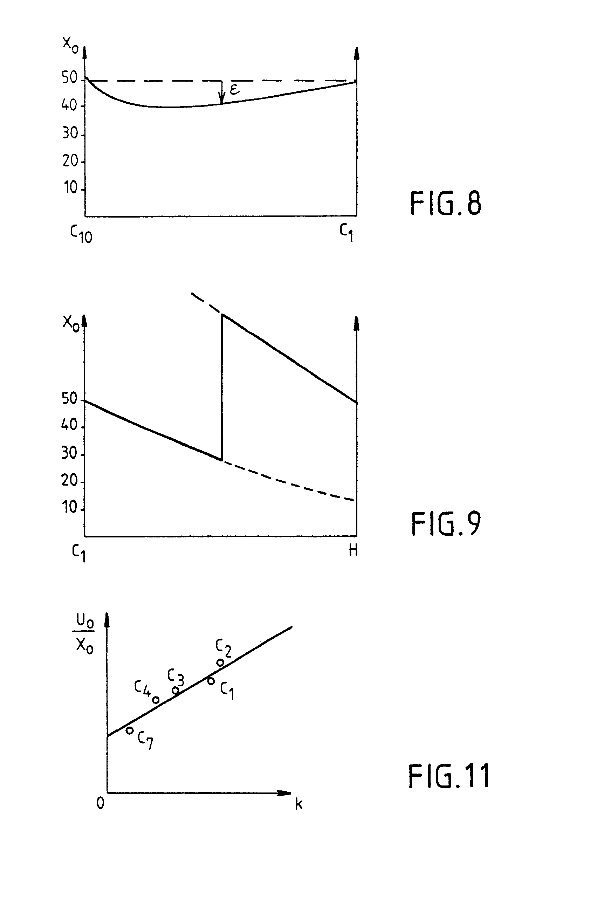

L'unité de traitement numérique 2 est schématisée à la figure 4. Elle comporte essentiellement un microprocesseur MP entouré de ses périphériques, suivi de l'élément d'affichage 4.

Le microprocesseur MP est relié au convertisseur CAN à travers un port d'entrée PE qui comporte en outre des bits pour commande par un interrupteur auxiliaire IA adapté à sélectionner, le cas échéant, une option de calcul numérique et par un bouton-poussoir PA adapté à envoyer un signal d'interruption au microprocesseur, en plus de ceux associés à chaque conversion.

Les périphériques du microprocesseur MP sont essentiellement une mémoire programme EPROM, une mémoire de données RAM, des décodeurs pour des sélections de circuits et un compteur-temporisateur CT qui, entre autres fonctions, commande par exemple toutes les secondes, une conversion analogique-numérique (signal CC).

Les résultats apparaissent sur les bits de sortie du port de sortie PS. Ils sont pris en compte par des décodeurs (trois dans l'exemple considéré) qui commandent un nombre égal d'afficheurs LED 7 segments. Le port PS comporte également des bits pour la commande des points décimaux, ainsi que la commande d'allumage des filaments (borne AF).

Un poussoir de mesure PM commande la remise à zéro de tous les circuits et le démarrage du microprocesseur en début de programme.

Les interconnexions entre les divers éléments sont faites de façon standard, à l'exception des bornes $M_1$ des ports d'entrée et de sortie qui sont reliées au poussoir PM.

Au repos, le signal appliqué en AF rend les transistors $T_1$ et $T_{11}$ passants, court-circuitant les éléments d'alimentation $T_2$, $T_3$, $T_{12}$ et $T_{13}$: aucun courant ne traverse les filaments.

Une pression sur le poussoir PM provoque l'apparition d'un signal en AF. Les bases des transistors $T_1$ et $T_4$ sont à un niveau bas de sorte que ces derniers sont bloques, tandis que les transistors $T_2$, $T_3$, $T_{12}$ et $T_{13}$ deviennent passants. Dans le cas par exemple du filament détecteur, commandés par le comparateur $A0_1$ en fonction de la différence de tension entre les bornes d'entrée de celui-ci, les transistors $T_1$ et $T_2$ régulent le courant dans le pont résistif de D de manière que la résistance du filament détecteur soit égale à

$$(R_5 \cdot R_7)/(P_1+R_6),$$

cette valeur étant ajustable par action sur le potentiomètre $P_1$. Le même raisonnement s'applique au filament compensateur. On notera que ce système accélère le chauffage des filaments puisqu'il les maintient en surtension tant que la température voulue n'est pas atteinte.

Les tension existant aux bornes des filaments sont soustraites l'une de l'autre par le comparateur $A0_3$, et leur différence est convertie, à instants répétés, par le convertisseur CAN qui assure ainsi, en des instants successifs, la prise en compte d'une grandeur significative U de l'alimentation des filaments.

L'unité de traitement numérique 3 prend en compte plusieurs valeurs successives U(t) de cette grandeur U, plus extrapole à partir de ces valeurs une fonction exponentielle d'équation

$$U(t)= \sum_{i=1}^{i=n} U_{o,i}.\exp\,(-k_i \cdot t),$$

dont on identifie les paramètres $U_{o,i}$ et $k_i$. Ceux-ci sont alors introduits dans une fonction de traitement définie empiriquement, qui donne à partir de ces paramètres une estimation du taux d'explosivité initial $x_o$ du mélange gazeux considéré. Dans le cas général, n=1, et on ne fait intervenir que deux paramètres $U_o$ et k.

Un dispositif du genre précité, et le procédé qu'il mit en oeuvre permettent d'échapper à la nécessité d'identifier le ou les gaz explosifs présents dans le milieu considéré dans la mesure où la Demanderesse a découvert qu'il était possible de déterminer empiriquement une telle fonction de traitement $x_o=F(U_{o,i},\ k_i)$ qui soit indépendante de la nature du ou des gaz présents.

La forme d'une telle fonction de traitement s'établit notamment sur la base des considérations théoriques suivantes.

Soit [G] la concentration d'un gaz G dilué dans un milieu tel que l'air, $\Delta H$ son enthalpie d'oxydation, et D son coefficient de diffusion dans le milieu gazeux considéré. Il ressort d'un article de FIRTH, JONES et JONES (Combustion and Flame, 21 (1973), 303—311) qu'au contact d'un filament chauffé, le gaz G fournit à ce dernier une énergie Q qui, en régime permanent et à température constante, en négligeant les phénomènes catharométriques, s'écrit:

$$Q=K \cdot \Delta H \cdot D \cdot [G] \qquad (1)$$

où K est une constante caractéristique du filament.

En passant de l'énergie Q à la puissance calorifique P dégagée par la combustion du gaz G, et en introduisant la notion de taux d'explosivité x défini par:

$$x=[G]/[G]_{LIE} \qquad (2)$$

on obtient, $K_1$ étant de même une constante caractéristique du filament:

$$P=K_1 \cdot \Delta H \cdot [G]_{LIE} \cdot D \cdot x \qquad (3)$$

qui devient:

$$P=K_1 \cdot K_2 \cdot D \cdot x \qquad (4)$$

en posant

$$K_2=\Delta H \cdot [G]_{LIE} \qquad (5)$$

FIRTH, JONES et JONES ont en outre observé que le coefficient $K_2$, qui est une grandeur caractéristique pour chaque gaz, varie peu d'un hydrocarbure à un autre.

En pratique, dans une cellule de mesure, le gaz s'épuise au cours du temps de sorte que le régime n'est pas permanent. Compte tenu des faibles concentrations sous lesquelles sont présents les gaz à mesurer, on approxime la consommation de gaz à l'aide d'une cinétique du premier ordre. On en déduit:

$$x=x_o \cdot \exp(-kt) \qquad (6)$$

$x_o$ étant le taux d'explosivité en l'instant $t=0$.

En comparant l'expression de l'énergie calorifique fournie par le gaz pendant sa combustion obtenue par intégration en t de l'équation (4) entre 0 et l'infini, et son expression thermochimique, il découle que k est proportionnel au coefficient de diffusion D.

On vérifie que U est une grandeur expérimentale représentative de la puissance P qui admet pour expression approchée:

$$U=U_o \cdot \exp(-k \cdot t) \qquad (6')$$

avec, $K_3$ étant une constante caractéristique du dispositif de mesure:

$$U_o=K_3 \cdot K_2 \cdot D \cdot x_o \ a \qquad (7)$$

On en déduit que le rapport $U_o/k$ ne dépend pas explicitement de D, d'où l'expression de $x_o$ indépendante du coefficient D:

$$x_o=F(U_o, k)=K_4 \cdot K_2 \frac{U_o}{k} \qquad (8)$$

$K_4$ étant une constante.

Dans la mesure où l'on admet, en s'inspirant des observations précitées de FIRTH et al., que $K_2$ ne dépend pas de la nature des gaz, il s'avère que la fonction F, définie par l'équation (8), constitue une fonction de traitement au sens précisé plus haut.

Dans les cas d'un mélange de gaz $G_1$ et $G_2$, la loi de Le Châtelier indique que le taux d'explosivité total x peut être approximé par la somme des taux d'explosivité individuels:

$$x = x_1+x_2$$
$$x = x_{o,1} \cdot \exp(-k_1 \cdot t)+x_{o,2} \cdot \exp(-k_2 \cdot t) \quad (6bis)$$
$$x_o=x_{o,1}+x_{o,2}$$

et
En écrivant:

$$U=U_{o,1} \cdot \exp(-k_1 \cdot t)+U_{o,2} \cdot \exp(-k_2 \cdot t) \qquad (6'bis)$$

il vient, en approximation, A étant une constante:

$$x_o=F_1(U_{o,1}, k_1, U_{o,2}, k_2)$$

$$x_o=A(U_{o,1}/k_1+U_{o,2}/k_2) \qquad (8bis)$$

Compte tenu de ce que l'équation (1) n'est valable qu'à température constante, l'équation de traitement déduite de l'équation (8) nécessite le maintien de la résistance des filaments à une valeur constante, d'où la présence das régulateurs 11 et 13 dans un dispositif selon l'invention.

Par mesure de simplification, l'invention préconise de déterminer les paramètres préexponentiels $U_o$ et exposant k à partir du terme du premier ordre du développement limité de l'équation exponentielle:

$$U(t)=U_o \cdot (1-k \cdot t) \qquad (9)$$

La détermination des paramètres $U_o$ et k associés à un gaz, ou à un mélange de gaz assimilé à un gaz unique, ne nécessite que la prise en compte par l'unité de traitement 3 de données correspondant à deux instants. Ceux-ci correspondent avantageusement à des durées de mesures qui correspondent à des rapports simples, par exemple du simple au double, ce qui simplifie considérablement les calculs. L'utilisation de données correspondant à plus de deux instants peut être préférée pour améliorer la précision sur $U_o$ et k à condition que les temps correspondants soient compatibles avec les hypothèses simplificatrices utilisées.

L'invention préconise en fait la prise en compte des valeurs de la grandeur significative d'alimentation choisie en trois instants correspondant à des intervalles de temps satisfaisant à des rapports simples (par exemple 1s, 2s et 4s); on traite successivement au moins deux des couples de valeurs ainsi obtenus (par exemple 1s et 2s; 2s et 4s) et l'on compare les valeurs $U_o$ et k qui s'en déduisent. La comparaison de ces dernières donne une estimation de la confiance à accorder à l'estimation finale du taux d'explosivité $x_o$, voire sert de base à l'obtention de valeurs corrigées dans le cas de mélanges de gaz.

La figure 5 présente l'évolution du signal U en fonction du temps écoulé depuis l'allumage des filaments, pour un hydrocarbure donné, pour divers taux d'explosivité. On observe que les courbes, au-delà de 1s environ, peuvent se décrire par une loi du type exponentiel ce qui justifie la relation (6). Un régime transitoire de chauffage de filament et de stabilisation (entre 0,5 et 1s environ), noté T, apparaît au début de ces courbes, rendant impossible toute mesure.

Les figures 6 et 7 corrèlent les taux d'explosivité estimés par un dispositif selon l'invention pour deux fonctions de traitement simples (après prise en compte de U après 2s et 4), avec les taux réels.

La figure 6 correspond à une fonction de traitement simplifiée à l'extrême puisqu'elle conduit à estimer le taux d'explosivité à partir du seul paramètre $U_o$; cette fonction présente cependant, par rapport à l'art antérieur, l'avantage de tenir compte de l'évolution du temps au cours des opérations de mesure. Les dispersions entre courbes extrêmes restent cependant du même ordre de grandeur que celles de la figure 1.

La mise en oeuvre comme fonction de traitement de le relation (8) conduit par contre à des résultats nettement plus sensibles puisque la figure 7 ne fait plus apparaître qu'un écart maximal de 30% environ, soit pratiquement une réduction de moitié par rapport à la figure 6.

Il est à noter que sur la figure 7, les courbes ne peuvent plus se classer comme sur la figure 1, en fonction des tailles moléculaires.

La figure 7 comporte deux courbes associées à l'hydrogène. Celle correspondant à H* résulte d'une correction supplémentaire nécessitée par les caractéristiques particulières de l'hydrogène par rapport aux hydrocarbures. L'hydrogène présente en effet un coefficient $K_2$ cinq fois plus faible que pour les hydrocarbures mais un coefficient D plus élevé (quatre fois celui du méthane). Sa présence peut cependant aisément être repérée selon l'invention dans la mesure où l'hydrogène présente des valeurs de k très différentes de celles des hydrocarbures. Il suffit d'inclure au traitement numérique des données une opération de comparaison de l'exposant k de l'exponentielle à une valeur $k_o$ choisie entre le gamme de valeurs associée à l'hydrogène et celle associée aux hydrocarbures. Si k est inférieur à $k_o$, on effectue les opérations associées à la relation (8), sinon on fait intervenir un coefficient multiplicatif spécifique de l'hydrogène.

Les figures 8 et 9 correspondent au dosage, non plus d'un gaz seul, mais d'un mélange de deux gaz. Les courbes qui y sont représentées résultent de l'application du traitement numérique qui vient d'être défini aux valeurs expérimentales indiquées dans l'article précité de FIRTH et al.

Dans le cas des deux hydrocarbures les plus différents du point de vue diffusion (le méthane et le décane), on constate que la fonction de traitement de l'équation (8) conduit à une sous-estimation du taux d'à peine 20% au maximum, ce qui est pleinement satisfaisant. La relation (8) s'avère ainsi particulièrement bien adaptée au dosage des hydrocarbures, qu'ils soient seuls ou en mélange.

Lorsque l'hydrogène participe au mélange gazeux, il n'en est pas de même, ainsi qu'il apparaît à la figure 9. La mise en oeuvre de la correction précitée, spécifique à l'hydrogène, conduit à un segment vertical conduisant d'une sous-estimation du taux réel de 40% environ à une sur-estimation de 60%.

La position horizontale de ce segment dépend de la valeur critique $k_o$ choisie. La courbe du bas correspond à l'application de la relation (8) qui conduit pour l'hydrogène à une nette sous-estimation de son taux d'explosivité (voir figure 7, courbe H). La courbe haute correspond à une multiplication des valeurs de la courbe basse par le coefficient multiplicatif spécifique de l'hydrogène.

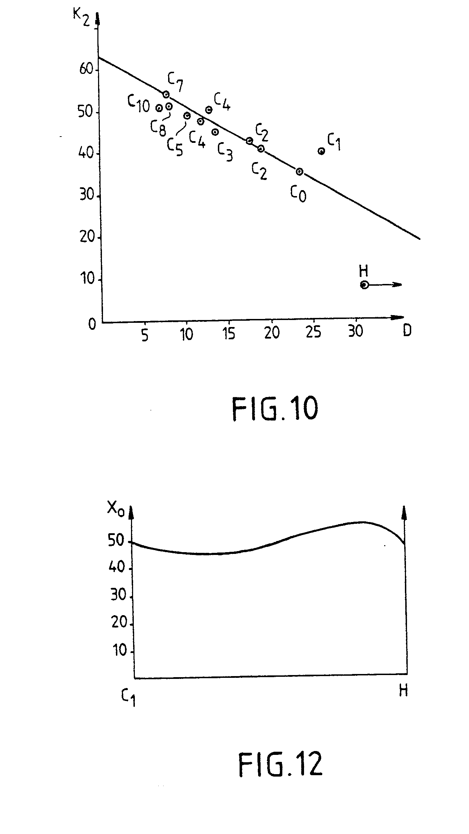

Ces disparités dans les résultats proviennent en fait de ce que, ainsi que cela apparaît à l'examen de la figure 10, le coefficient $K_2$ varie d'un hydrocarbure à l'autre, d'un gaz explosif à l'autre (H, CO..).

De manière à tenir compte de ces variations, l'invention préconise, lorsque cela apparaît utile, de modifier en conséquence la forme de la fonction de traitement mise en oeuvre pour le traitement de $U_o$ et k.

L'invention propose ainsi une première forme amendée de la fonction de traitement:

$$x_o = F'\ (U_o,\ k) = B.\frac{U_o}{k+b} \qquad (10)$$

dont la justification apparaît à la figure 11, sur laquelle est reporté, en fonction de la valeur mesurée du paramètre k, le rapport du second paramètre $U_o$ par le taux réel d'explosivité $x_o$ pour plusieurs hydrocarbures. On peut tracer une droite passant sensiblement par ces points, mais celle-ci ne passe pas par l'origine comme le sous-entendait la relation (8), d'où l'intervention d'un coefficient b dans la relation (10).

Une autre fonction de traitement peut se déduire de la figure 10 précitée à partir de la droite qui y est tracée, passant au plus près des points qui y sont reportés. En reportant l'expression de $K_2$ en fonction de D qui peut s'en déduire dans l'équation (7) et en éliminant D entre cette équation et l'expression de k, on définit une nouvelle fonction de traitement F'' analogue à F', mais dont le dénominateur est un polynôme en k du second degré.

Si l'on reporte sur la figure 11 d'autres points tels que l'hydrogène ou d'autres gaz explosifs différents des hydrocarbures, l'ensemble des points ainsi tracés se révèle pouvoir être décrit de façon convenable par une courbe-polynôme du troisième degré. En reportant ce polynôme au dénominateur de la fonction de traitement, la Demanderesse a montré que cette nouvelle fonction de traitement conduit à une bonne approximation de taux d'explosivité d'un mélange contenant de l'hydrogène ainsi qu'en témoigne la figure 12 qui correspond au mélange méthane-hydrogène de la figure 9.

En variante, on assimile le mélange gazeux considéré à une mélange de deux gaz (voire plus) plus ou moins fictifs et on identifie les paramètres $U_{o,1}$, $k_1$, $U_{o,2}$, $k_2$ associés de l'équation (6'bis); on calcule les taux d'explosivité de ces gaz fictifs et on en fait la somme conformément à l'équation (8bis) ou à une équation un peu plus élaborée. Cette variante a l'avantage de traiter séparément les gaz lents et les gaz rapides. En pratique, pour l'identification des paramètres $U_{o,1}$ et $k_i$, lorsque est égal à 2, on utilisera les trois premiers ordres du développement limité des fonctions exponentielles en présence, ce qui donnera quatre coefficients dont on déduira les paramètres recherchés; il suffit de quatre valeurs de U(t). En variante, lorsque des valeurs de U sont prises en compte à des temps qui sont tous des multiples d'un temps $t_1$, ces valeurs peuvent s'exprimer en fonction de $U_{o,1}$ et $U_{o,2}$, et aussi de exp $(-k_1 \cdot t_1)$ et exp$(-k_2 \cdot t_1)$. Ces paramètres peuvent être déduits à partir de quatre valeurs U(t); $k_1$ et $k_2$ sont alors identifiés sous forme exponentielle et sont de préférence introduits, sous cette forme, dans une fonction de traitement appropriée.

Il s'avère ainsi que de nombreuses fonctions de traitement peuvent être proposées dans le cadre de l'invention. Ces fonctions, définies empiriquement, ont bien sûr une forme d'autant plus complexe que l'on recherche une grande précision, qu'il y a de nombreux gaz en présence, et que le nombre de gaz susceptibles d'être dosés, seuls ou en mélange avec d'autres, est élevé. En pratique, une telle fonction de traitement est préétablie à partir des couples de paramètres expérimentaux $(U_o/x_o, k)$ obtenus pour une sélection de gaz ou mélanges de gaz de référence. On choisit arbitrairement la forme d'une fonction empirique f par laquelle on cherche à représenter la corrélation des couples d'étalonnage $(U_o/x_o, k)$ et on identifie les coefficients de cette fonction f. En règle générale, cette fonction de corrélation f est choisie sous la forme d'un polynôme en k, de bas degré de préférence. Le taux d'explosivité $x_o$ est donné par $U_o/f(k)$ dans le cas d'un seul gaz fictif, ou par $U_{o,1}/f(k_1)+U_{o,2}/f(k_2)$ dans le cas de deux gaz fictifs.

Dans le cas de la fonction de traitement définie par l'équation (8), l'invention préconise en outre d'étalonner le dispositif de dosage avec du méthane: ainsi que cela ressort de la figure 7, toutes les mesures seront ainsi sur-estimées, du moins dans le cas de gaz pratiquement purs ou presque, ce qui est favorable à la sécurité.

Il va de soi que de nombreuses variantes de réalisation peuvent être proposées par l'homme de l'art sans sortie du cadre de l'invention, tant en ce que concerne le filament (nature), la cellule de mesure (forme, volume), le dispositif régulateur, le comparateur, le convertisseur, que l'unité de traitement numérique et ses éléments d'affichage. De même, les paramètres expérimentaux peuvent être choisis dans une large gamme de valeurs (température ou résistance de filament).

L'invention a été décrite dans le cas d'un milieu gazeux à base d'air; elle s'applique bien sûr à tout autre environnement gazeux dont le taux d'explosivité doit rester limité.

L'invention trouve ainsi un champ d'application très vaste, incluant les mines et les industries chimiques, où l'on veut se préserver de toute fuite de gaz explosif. Un dispositif selon l'invention peut alors être fixe, assurant automatiquement, en cas de dépassement d'un taux d'explosivité critique, le déclenchement de signaux d'alarme et de mesures d'urgence.

**Revendications**

1. Procédé de détermination du taux d'explosivité d'un milieu gazeux contenant au moins un gaz explosif, selon lequel on chauffe dans ce milieu un filament détecteur par passage de courant électrique, caractérisé en ce que:
—on allume le filament par connexion à une source d'alimentation (20);
—on régule l'alimentation du filament détecteur (D) de manière à en maintenir la résistance constante;
—on prend en compte, en plusieurs instants successifs comptés à partir de l'allumage du filament, la valeur U(t) d'une grandeur U significative de l'alimentation dudit filament;
—on extrapole à partir des dites valeurs U(t) une courbe exponentielle d'équation

$$U(t) = \sum_{i=1}^{i=n} u_{o,i} \cdot \exp(-k_i \cdot t)$$

dont on identifie les paramètres $U_{o,i}$ et $k_i$, n étant un petit nombre entier égale voire supérieure à 1 choisi arbitrairement et i prenant dans cette équation des valeurs entières successives de 1 à n; et
—on introduit les paramètres $U_{o,i}$ et $k_i$ dans une fonction de traitement F adaptée à donner, indépendamment de la nature du gaz explosif présent dans ce milieu gazeux, à partir de ces paramètres, une estimation du taux d'explosivité initial $(x_o)$ dudit milieu gazeux.

2 Procédé selon la revendication 1, caractérisé en ce que, en outre:
—on allume, en même temps que le filament détecteur, un filament compensateur (C), identique à ce dernier, placé dans un environnement analogue à celui de ce dernier mais exempt de gaz explosifs, par connexion à une source d'alimentation (30);

—on régule l'alimentation de ce filament compensateur de manière à en maintenir constante la résistance; et

—on obtient la grandeur U par soustraction de la tension d'alimentation du filament compensateur à celle du filament détecteur.

3. Procédé selon la revendication 1 ou la revendication 2, caractérisé en ce que l'estimation du taux d'explosivité initial est obtenue, pour n=1, par division de $U_o$ par un polynôme en k, ou, pour les valeurs supérieures de n, par la somme de paramètres $U_{o,i}$ divisés par un même polynôme en $k_i$.

4. Procédé selon la revendication 3, caractérisé en ce que l'estimation du taux d'explosivité initial est obtenue, à une constant multiplicatrice près, par division de $U_o$ par k pour n=1, ou par addition des rapports $U_{o,i}/k_i$ pour n>1.

5. Procédé selon l'une quelconque des revendications 1 à 4, caractérisé en ce que ladite courbe exponentielle est extrapolée sous la forme $U(t)=U_o \cdot \exp(-k \cdot t)$, n étant égal à 1.

6. Procédé selon la revendication 5, caractérisé en ce qu'on détermine les paramètres $U_o$ et k à partir des valeurs U(t) en remplaçant l'équation de la courbe exponentielle par le terme du premier ordre de son développement limité.

7. Procédé selon la revendication 5 ou la revendication 6, caractérisé en ce que les temps associés à la prise en compte de deux valeurs successives U(t), comptés à partir de l'allumage du filament détecteur, sont dans un rapport 1 à 2.

8. Procédé selon la revendication 7, caractérisé en ce que des valeurs U(t) sont prises en compte en trois instants successifs.

9. Procédé selon l'une quelconque des revendications 5 à 8, caractérisé en ce que l'on introduit les paramètres $U_o$ et k dans l'une de plusieurs fonctions de traitement choisie en fonction de la position du paramètre k par rapport à une valeur critique $k_o$.

10. Dispositif de détermination du taux d'explosivité d'un milieu gazeux, pour mise en oeuvre du procédé selon l'une quelconque des revendications 1 à 9, caractérisé en ce qu'il comporte:

—un filament détecteur (D) disposé dans une cellule de mesure (10) enfermant le milieu gazeux;

—un circuit régulateur (11) comportant une source d'alimentation (20), adapté, à alimenter électriquement ledit filament détecteur de manière à en maintenir constant la résistance;

—un convertisseur analogique-numérique (CAN) commandé par un compteur-temporisateur (CT) et auquel est appliquée une grandeur (U) significative de l'alimentation dudit filament; et

—une unité de traitement numérique (2) adaptée à prendre en compte les signaux fournis par le convertisseur et à déterminer une estimation du taux d'explosivité du milieu gazeux.

11. Dispositif selon la revendication 10, caractérisé en ce qu'il comporte en outre:

—un filament compensateur (C) identique au filament détecteur, disposé dans une cellule de mesure (12) voisine de celle du filament détecteur mais ne contenant aucun gaz explosif;

—un circuit régulateur (13) analogue à celui associé au filament détecteur; et

—un élément de comparaison (14) adapté à fournir la différence entre les tension d'alimentation des filaments détecteur et compensateur à l'entrée du convertisseur analogique-numérique (CAN).

12. Dispositif selon la revendication 10 ou la revendication 11, caractérisé en ce que le régulateur (11, 13) définit avec le filament (D, C) un pont résistif ($P_1$, $R_5$, $R_6$, $R_7$, D; $P_{11}$, $R_{15}$, $R_{16}$, $R_{17}$, C) alimenté selon une diagonale au travers d'un élément d'alimentation ($T_2$, $T_3$; $T_{12}$, $T_{13}$) commandé par un comparateur ($AO_1$; $AO_{11}$) disposé selon l'autre diagonale dudit pont résistif.

13. Dispositif selon la revendication 12, caractérisé en ce que l'élement régulateur (11, 13) comporte en outre un élément d'amortissement des oscillations thermiques du filament ($R_8$, $C_1$; $R_{18}$, $C_{11}$).

14. Dispositif selon l'une quelconque des revendications 10 à 13, caractérisé en ce que l'élément régulateur (11, 13) est commandé au travers d'un élément d'allumage ($T_1$, $T_{11}$) depuis l'unité de traitement numérique.

15. Dispositif selon l'une quelconque des revendications 10 à 14, caractérisé en ce que l'unité de traitement numérique (2) admet plusieurs options de calcul donnant une estimation du taux d'explosivité du milieu gazeux en fonction des paramètres $U_o$ et k.

16. Dispositif selon l'une quelconque des revendications 10 à 15, destiné au dosage d'hydrocarbures et d'hydrogène, caractérisé en ce que l'unité de traitement numérique contient en mémoire des données obtenues par étalonnage avec du méthane.

**Patentansprüche**

1. Verfahren zur Bestimmung der Explosionsgrenze eines gasförmigen Mediums, welches wenigstens ein explosives Gas enthält, bei welchem in dem Medium ein Detektordraht mittels Stromflusses erhitzt wird, dadurch gekennzeichnet, daß:

—der Draht durch Verbinden mit einer Speisquelle (20) eingeschaltet wird;

—die Speisung des Detektordrahtes (D) so geregelt wird, daß der Widerstand konstant gehalten wird;

—in mehreren hintereinanderliegenden Zeitpunkten gerechnet von dem Einschalten des Drahtes der Wert U(t) einer für die Speisung des Drahtes signifikanten Größe U berücksichtigt wird;

—ausgehend von den genannten Werten U(t) eine exponentielle Kurve aus der Gleichung

$$U(t)= \sum_{i=1}^{i=n} U_{o,i} \cdot \exp(-k_i \cdot t)$$

extrapoliert wird, von welcher Gleichung man die Parameter $U_{o,i}$ und $k_i$ ermittelt, wobei n eine kleine ganze Zahl bedeutet, die gleich oder größer als 1 ist und willkürlich gewählt wird, und i in dieser Gleichung sukzessive die Werte der ganzen Zhalen zwischen 1 und n annimmt; und

—die Parameter $U_{o,i}$ und $k_i$ in eine Verarbeitungsfunktion F eingeführt werden, welche geeignet ist, ausgehend von diesen Parametern und unabhängig von der Art des explosiven Gases im gasförmigen Medium eine Abschätzung der anfänglichen Explosionsgrenze ($x_o$) dieses gasförmigen Mediums anzugeben.

2. Verfahren nach Anspruch 1, dadurch gekennzeichnet, daß:

—man zur selben Zeit wie den Detektordraht auch einen zu letzterem identen Ausgleichsdraht (C) durch Verbinden mit einer Speisequelle (30) einschaltet, welcher in einer analogen Umgebung wie jener de Detektordrahtes mit der Ausnahme, daß kein Explosionsgas enthalten ist, angeordnet ist;

—die Speisung dieses Ausgleichdrahtes so geregelt wird, daß der Widerstand konstant gehalten wird; und

die Größe U durch Subtraktion der Speisespannung des Ausgleichsdrahtes von jener des Detektordrahtes ermittelt wird.

3. Verfahren nach Anspruch 1 oder 2, dadurch gekennzeichnet, daß die Abschätzung der anfänglichen Explosionsgrenze für n=1 durch Division von $U_o$ durch ein Polynom von k erhalten wird oder für die höheren Werte von n durch die Summe der Parameter $U_{o,i}$ dividiert durch das gleiche Polynom von $k_1$.

4. Verfahren nach Anspruch 3, dadurch gekennzeichnet, daß die Abschätzung der anfänglichen Explosionsgrenze durch Division von $U_o$ durch k für n=1 oder durch Addition der Verhältnisse $U_{o,i}/k_i$ für n>1 bis auf eine Multiplikationskonstante genau erhalten wird.

5. Verfahren nach einem der Ansprüche 1 bis 4, dadurch gekennzeichnet, daß die exponentielle Kurve in der Form $U(t)=U_o \cdot \exp(-k \cdot t)$ für n gleich 1 extrapoliert wird.

6. Verfahren nach Anspruch 5, dadurch gekennzeichnet, daß die Parameter $U_o$ und k ausgehend von den Werten U(t) dadurch bestimmt werden, daß die Gleichung der exponetiellen Kurve durch den Term erster Ordnung ihrer begrenzten Entwicklung bestimmt wird.

7. Verfahren nach Anspruch 5 oder 6, dadurch gekennzeichnet, daß die Zeitwerte, die den Berücksichtigungen von zwei aufeinanderfolgenden Werten von U(t) zugeordnet sind, beginnend vom Einschalten des Detektordrahtes im Verhältnis 1 zu 2 stehen.

8. Verfahren nach Anspruch 7, dadurch gekennzeichnet, daß die Werte von U(t) in drei aufeinanderfolgenden Zeitpunkten berücksichtigt werden.

9. Verfahren nach einem der Ansprüche 5 bis 8, dadurch gekennzeichnet, daß die Parameter $U_o$ und k in eine von mehreren Verarbeitungsfunktionen eingeführt werden, wobei die Auswahl entsprechend dem Wert des Parameters k im Verhältnis zu einem kritischen Wert $k_o$ getroffen wird.

10. Vorrichtung zur Bestimmung der Explosionsgrenze eines gasförmigen Mediums, zur Ausführung des Verfahrens nach einem der Ansprüche 1 bis 9, dadurch gekennzeichnet, daß sie:

—einen Detektordraht (D), der in einer Meßzelle (10) angeordnet ist, welche das gasförmige Medium enthält;

—einen Regelkreis (11) mit einer Speisequelle (20), der so eingerichtet ist, daß er den Detektordraht derart mit Strom versorgt, daß der Widerstand konstant gehalten wird;

einen Analog-Digital-Wandler CAN), der von einem Zähler-Verzögerungskreis (CT) gesteuert ist und dem eine Größe (U) zugeführt wird, welche für die Speisung des Drahtes signifikativ ist; und

—eine digitale Verarbeitungseinheit (2) aufweist, welche die vom Wandler übermittelten Signale aufnehmen und daraus eine Abschätzung der Explosionsgrenze des gasförmigen Mediums ermitteln kann.

11. Vorrichtung nach Anspruch 10, dadurch gekennzeichnet, daß sie weiter:

—einen zum Detektordraht identen Ausgleichsdraht (C), der in einer zu Meßzelle des Detektordrahtes benachbarten Meßzelle (12) angeordnet ist, welche das gleiche gasförmige Medium ohne das Explosionsgas enthält;

—einen Regelkreis (13) analog zu jenem für den Detektordraht; und

ein Vergleichselement (14) zur Ermittlung der Differenz zwischen den Speisespannungen des Detektordrahtes und des Ausgleichsdrahtes am Eingang des Analog-Digital-Wandlers (CAN) aufweist.

12. Vorrichtung nach Anspruch 10 oder 11, dadurch gekennzeichnet, daß der Regler 11, 13 zusammen mit dem Draht (D, C) eine Widerstandbrücke ($P_1$, $R_5$, $R_6$, $R_7$, D; $P_{11}$, $R_{15}$, $R_{16}$, $R_{17}$, C) bildet, welche mit einem Diagonalzweig über ein Speiseelement ($T_2$, $T_3$, $T_{12}$, $T_{13}$) gespeist wird, welches von einem Komparator ($A0_1$, $A0_{11}$) gesteuert wird, welcher im anderen Diagonalzweig der Widerstandsbrücke angeordnet ist.

13. Vorrichtung nach Anspruch 12, dadurch gekennzeichnet, daß das Regelelement (11, 13) überdies ein Element zur Dämpfung der thermischen Schwingungen des Drahtes ($R_8$, $C_1$; $R_{18}$, $C_{11}$) enthält.

14. Vorrichtung nach einem der Ansprüche 10 bis 13, dadurch gekennzeichnet, daß das Regelelement (11, 13) mittels eines Einschaltelementes ($T_1$, $T_{11}$ von der digitalen Verarbeitungseinheit gesteuert wird.

15. Vorrichtung nach einem der Ansprüche 10 bis 14, dadurch gekennzeichnet, daß die digitale Verarbeitungseinheit (2) mehrere auswählbare Rechenergebnisse zuläßt, welche eine Abschätzung der Explosionsgrenze des gasförmigen Mediums als Funktion der Parameter $U_o$ und k geben.

16. Vorrichtung nach einem der Ansprüche 10 bis 15, bestimmt zur Dosierung von Kohlenwasserstoffen und Wasserstoff, dadurch gekennzeichnet, daß die digitale Verarbeitungseinheit in einem Speicher Ausgangswerte enthält, die durch Kalibrierung mit Methan erhalten wurden.

**Claims**

1. Process for determining the degree of explosiveness of a gaseous medium containing at least one explosive gas, according to which a detector filament is heated in this medium by the flow of an electrical current, characterized in that:
—the filament is lit by connection to a supply source (20);
—the supply to the detector filament (D) is regulated so that its resistance is kept constant;
—account is taken, at several successive instants counted from the lighting of the filament, of the value U(t) of a quantity U representative of the supply to the said filament;
—from the said values U(t) an exponential curve of the equation

$$U(t)= \sum_{i=1}^{i=n} U_{o,i} \cdot \exp(-k_i \cdot t)$$

is extrapolated, in which the parameters $U_{o,i}$ and $k_i$ are identified, n being a small integer equal to or greater than 1 chosen arbitrarily and i taking in this equation successive integral values from 1 to n; and
—the parameters $U_{o,i}$ and $K_i$ are introduced into a processing function F capable of giving, independently of the nature of the explosive gas present in this gaseous medium, from these parameters, an estimate of the initial degree of explosiveness $(x_o)$ of the said gaseous medium.

2. Process according to Claim 1, characterized in that, in addition:
—at the same time as the detector filament, there is lit a compensating filament (C) identical with the latter, placed in an environment which is similar to that of the latter but free from explosive gases, by connection to a supply source (30);
—the supply to this compensating filament is regulated so as to keep its resistance constant; and
—the quantity U is obtained by subtracting the supply voltage to the compensating filament from that of the detector filament.

3. Process according to Claim 1 or Claim 2, characterized in that the estimate of the initial degree of explosiveness is obtained, for n=1, by division of $U_o$ by a polynomial in k, or, for greater values of n, by the sum of the parameters $U_{o,i}$ divided by the same polynomial in $k_i$.

4. Process according to Claim 3, characterized in that the estimate of the initial degree of explosiveness is obtained, to within a multiplying constant, by division of $U_o$ by k for n=1, or by addition of the ratios $U_{o,i}/k_i$ for n>1.

5. Process according to any one of Claims 1 to 4, characterized in that the said exponential curve is extrapolated in the form $U(t)=U_o \cdot \exp(-k \cdot t)$, n being equal to 1.

6. Process according to Claim 5, characterized in that the parameters $U_o$ and k are determined from the values U(t) by replacing the equation of the exponential curve by the first-order term of its limited expansion.

7. Process according to Claim 5 or Claim 6, characterized in that the times associated with taking into account two successive values U(t), counted for the lighting of the detector filament, are in a ratio of 1 to 2.

8. Process according to Claim 7, characterized in that values U(t) are taken into account over three successive instants.

9. Process according to any one of Claims 5 to 8, characterized in that the parameters $U_o$ and k are introduced into one of several processing functions which is chosen as a function of the position of the parameter k in relation to a critical value $k_o$.

10. Device for determining the degree of explosiveness of a gaseous medium, for making use of the process according to any one of Claims 1 to 9, characterized in that it comprises:
—a detector filament (D) arranged in a measuring cell (10) enclosing the gaseous medium;
—a regulating circuit (11) comprising a supply source (20), capable of feeding the said detector filament electrically so as to keep its resistance constant;
—an analog-digital converter (ADC) controlled by a counter-timer (CT) and to which is applied a quantity (U) representing the supply to the said filament; and
—a digital processing unit (2) capable of taking into account the signals supplied by the converter and of determining an estimate of the degree of explosiveness of the gaseous medium.

11. Device according to Claim 10, characterized in that it additionally comprises:
—a compensating filament (C) identical to the detector filament, arranged in a measuring cell (12) in the vicinity of that of the detector filament but containing no explosive gas;
—a regulating circuit (13) similar to that associated with the detector filament; and
—a comparison unit (14) capable of supplying the difference between the supply voltages to the detector and compensating filaments to the input of the analog-digital converter (ADC).

12. Device according to Claim 10 or Claim 11, characterized in that the regulator (11, 13) defines with the filament (D, C) a resistance bridge ($P_1$, $R_5$, $R_6$, $R_7$, D, $P_{11}$, $R_{15}$, $R_{16}$, $R_{17}$, C) supplied along a diagonal across a supply unit ($T_2$, $T_3$, $T_{12}$, $T_{13}$) controlled by a comparator ($AO_1$, $AO_{11}$) arranged along the other diagonal of the said resistance bridge.

13. Device according to Claim 12, characterized in that the regulating unit (11, 13) additionally comprises a unit for damping the thermal oscillations of the filament ($R_8$, $C_1$, $R_{18}$, $C_{11}$).

14. Device according to any one of Claims 10 to 13, characterized in that the regulating unit (11, 13) is controlled through a lighting unit ($T_1$, $T_{11}$) from the digital processing unit.

15. Device according to any one of Claims 10 to 14, characterized in that the digital processing unit (2) permits several computing options giving an estimate of the degree of explosiveness of the gaseous medium as a function of the parameters $U_o$ and k.

16. Device according to any one of Claims 10 to 15, intended for the quantitative determination of hydrocarbons and hydrogen, characterized in that the digital processing unit contains in its memory data obtained by calibration with methane.

FIG.1

FIG.5

FIG.6

FIG.7

FIG. 2

FIG. 4

FIG:3

0 114 009

FIG.8

FIG.9

FIG.11

FIG.10

FIG.12

5